(19) Europäisches Patentamt
European Patent Office
Office européen des brevets

(11) **EP 4 028 731 B1**

(12) **EUROPÄISCHE PATENTSCHRIFT**

(45) Veröffentlichungstag und Bekanntmachung des Hinweises auf die Patenterteilung:
**19.06.2024 Patentblatt 2024/25**

(21) Anmeldenummer: **20761192.2**

(22) Anmeldetag: **20.08.2020**

(51) Internationale Patentklassifikation (IPC):
*G01F 1/84* *(2006.01)*

(52) Gemeinsame Patentklassifikation (CPC):
**G01F 1/8436**

(86) Internationale Anmeldenummer:
**PCT/EP2020/073395**

(87) Internationale Veröffentlichungsnummer:
**WO 2021/047887 (18.03.2021 Gazette 2021/11)**

(54) **VERFAHREN ZUM BETREIBEN EINES MESSGERÄTES MIT MINDESTENS EINEM OSZILLATOR UND MESSGERÄT ZUR DURCHFÜHRUNG DES VERFAHRENS**

METHOD FOR OPERATING A MEASURING DEVICE WITH AT LEAST ONE OSCILLATOR, AND MEASURING DEVICE FOR CARRYING OUT SAID METHOD

PROCÉDÉ POUR FAIRE FONCTIONNER UN DISPOSITIF DE MESURE AVEC AU MOINS UN OSCILLATEUR ET DISPOSITIF DE MESURE POUR METTRE EN OEUVRE LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2019 DE 102019124709**

(43) Veröffentlichungstag der Anmeldung:
**20.07.2022 Patentblatt 2022/29**

(73) Patentinhaber: **Endress + Hauser Flowtec AG**
**4153 Reinach (CH)**

(72) Erfinder:
• **SCHERRER, Rémy**
  **68960 Oberdorf (FR)**
• **LALLA, Robert**
  **79541 Lörrach (DE)**
• **HUBER, Reinhard**
  **79713 Bad Säckingen (DE)**
• **ANKLIN, Martin Josef**
  **4143 Dornach (CH)**

(74) Vertreter: **Hahn, Christian**
**Endress+Hauser Group Services**
**(Deutschland)AG +Co. KG**
**Colmarer Straße 6**
**79576 Weil am Rhein (DE)**

(56) Entgegenhaltungen:
WO-A1-2009/134830    WO-A1-2012/062551
WO-A1-2018/017080    US-A- 4 934 196
US-A1- 2005 274 200    US-A1- 2010 198 531
US-A1- 2018 209 831    US-B1- 6 311 136

EP 4 028 731 B1

**Beschreibung**

Die vorliegende Erfindung betrifft ein Verfahren zum Betreiben eines Messaufgerätes, welches einen Messaufnehmer mit einem Oszillator aufweist, wobei der Oszillator mindestens ein schwingfähiges Messrohr zum Führen eines Mediums aufweist, wobei das Messgerät insbesondere zur Ermittlung der Massedurchflussrate, der Dichte und/oder der Viskosität des Mediums dient. Weiterhin betrifft die Erfindung ein Messgerät zur Durchführung des Verfahrens. Die Oszillatoren gattungsgemäßer Messaufnehmer werden gewöhnlich mit der Resonanzfrequenz einer Nutzmode zu Schwingungen angeregt. Die Amplitude der Schwingung bei Resonanz im Verhältnis zur Erregerleistung ermöglicht Aussagen über die Güte des Oszillators und damit über die Viskosität des Mediums. Die Resonanzfrequenz einer Biegeschwingungsmode ermöglicht die Bestimmung der Dichte, und die Amplitude einer überlagerten Schwingung im Coriolismode, die in Form eines zeitlichen Versatzes zwischen einem Schwingungssignal eines einlassseitigen Schwingungssensors und eines auslassseitigen Schwingungssensors erfassbar ist, ermöglicht die Bestimmung der Massedurchflussrate. Die ermittelten Werte für die beschriebenen Messgrößen, sind valide solange die Annahmen über die mechanischen Eigenschaften des Oszillators zutreffen, die sich in Koeffizienten von Berechnungsmodellen für die Messgrößen niederschlagen. Dies ist bei der Inbetriebnahme eines Messaufnehmers sicher gegeben, aber die mechanischen Eigenschaften können sich abhängig von Einsatzbedingungen aus verschiedenen Gründen ändern. Es besteht daher Interesse daran, die mechanischen Eigenschaften des Oszillators zu überwachen. Dazu lehrt beispielsweise die internationale Veröffentlichung WO 2012 062551 A1 eine Anregung außer Resonanz.

Bei den üblichen Werten für die Güte des Oszillators von mindestens einigen 100 ist die Amplitude x bei einer Anregung mit dem s-Fachen der Resonanzfrequenz für s > 1,05 bzw. s < 0,95 gegeben als x= F/(D*(s²-1)), wobei F eine modale Erregerkraft und D eine modale Steifigkeit ist. Übertragen auf messbaren Observablen Us, Ie und f erhält man beispielsweise die folgende Gleichung, welche eine geeignete Überwachungsgröße H definiert, beispielsweise:

$$H := Us/(Ie*f^2) = K/(D*(s^2 - 1)),$$

wobei K eine Konstante ist, welche insbesondere Faktoren der Übertragungsfunktionen zwischen dem Erregerstrom Ie und der Erregerkraft, sowie zwischen der Geschwindigkeit des Oszillators und der Sensorspannung Us der elektromagnetischen Sensoren bündelt.

Abgesehen von ggf. zu modellierenden Temperaturabhängigkeiten und/oder Druckabhängigkeiten ändert sich die modale Steifigkeit D bei einem intakten Messaufnehmer nicht. Dem entsprechend sollte bei einem gegebenen Wert für s, das auf der linken Seite der Gleichung gegebene Verhältnis der Observablen sich nicht verändern.

Wenn dagegen Veränderungen im Verhältnis der Observablen festzustellen sind, bedeutet dies, dass die modale Steifigkeit D oder der Faktor s oder die der Konstanten K zugrundeliegenden Größen sich verändert haben. Eine veränderte modale Steifigkeit kann beispielsweise durch Abrasion oder Korrosion verursacht sein, ein abweichender Faktor s, würde einen Fehler in der Frequenzsteuerung implizieren, eine Veränderung im Faktor K würde beispielsweise Hardwarefehler in der Sensorelektronik indizieren. Was auch immer die Ursachen sind. In jedem Fall sollte eine derartige Abweichung zuverlässig erkannt und signalisiert werden.

Mit den zur Verfügung stehenden Erregerleistungen ist nicht praktikabel eine Messung eines aktuellen Werts der Überwachungsgröße H durchzuführen und gleichzeitig einen Massedurchflussmesswert mit hinreichender Genauigkeit zu bestimmen. Daher ist es üblich, einen aktuellen Wert der r Überwachungsgröße nur anlässlich gelegentlicher Überprüfungen zu ermitteln, wenn der Messbetrieb für kurze Zeit unterbrochen werden kann. Es ist die Aufgabe der vorliegenden Erfindung, hier Abhilfe zu schaffen.

Die Aufgabe wird erfindungsgemäß gelöst durch das Verfahren zum Betreiben eines Messaufnehmers gemäß dem unabhängigen Patentanspruch 1 und den Messaufnehmer gemäß dem unabhängigen Patentanspruch 13.

Das erfindungsgemäße Verfahren dient zum Betreiben eines Messgerätes, welches einen Messaufnehmer mit einem Oszillator aufweist, wobei der Oszillator mindestens ein schwingfähiges Messrohr zum Führen eines Mediums aufweist, wobei das Messgerät insbesondere zur Ermittlung mindestens einer der Messgrößen Massedurchflussrate, Dichte und Viskosität des Mediums dient; wobei das Verfahren die folgenden Schritte aufweist:

Ermitteln eines aktuellen Werts einer Resonanzfrequenz für eine Schwingungsmode des Oszillators;
Anregen einer Schwingung außer Resonanz mit einer Anregungsfrequenz, die sich von dem aktuellen Wert der Resonanzfrequenz unterscheidet; und
Ermitteln der Amplitude des Sensorsignals der Schwingung außer Resonanz;
wobei die Amplitude des Erregerstromsignals, mit welcher die Schwingung außer Resonanz angeregt wird, nicht größer ist als die Amplitude des Erregerstromsignals, mit welcher gleichzeitig die Resonanzschwingung angeregt wird;
wobei zur Ermittlung der Amplitude des Sensorsignals der Schwingung außer Resonanz ein Sensorsignal eines Schwingungssensors des Oszillators über ein Tiefpassfilter erfasst wird, dessen Zeitkonstante nicht weniger als 1000 Periodendauern, beispielsweise nicht weniger als 10000 Periodendauern

und insbesondere nicht weniger als 100000 Periodendauern der Schwingung außer Resonanz beträgt.

In einer Weiterbildung der Erfindung ist die Schwingung außer Resonanz einer Schwingung bei der Resonanzfrequenz überlagert.

In einer Weiterbildung der Erfindung wird das Sensorsignal des Schwingungssensors bei der Resonanzfrequenz des Oszillators zur Bestimmung der Amplitude des Sensorsignals der Schwingung außer Resonanz mittels eines Filters unterdrückt, insbesondere mittels eines Kerbfilters bzw. Notch-Filters.

In einer Weiterbildung der Erfindung beträgt die Amplitude des Erregerstromsignals, mit welcher die Schwingung außer Resonanz angeregt wird, nicht mehr als 4 mA, beispielsweise nicht mehr als 1,5 mA.

In einer Weiterbildung der Erfindung beträgt die Amplitude des Erregerstromsignals, mit welcher die Schwingung außer Resonanz angeregt wird, nicht weniger als 0,25 mA, insbesondere nicht weniger als 0,5 mA und bevorzugt nicht weniger als 0,75 mA.

Erfindungsgemäß beträgt die Amplitude des Erregerstromsignals, mit welcher die Schwingung außer Resonanz angeregt wird, nicht mehr als die Hälfte insbesondere nicht mehr als ein Viertel insbesondere nicht mehr als ein Achtel der Amplitude des Erregerstromsignals, mit welcher gleichzeitig die Resonanzschwingung angeregt wird. Diese Verhältnisse der Erregerstromsignalamplituden gelten insbesondere für Messaufnehmer mit einem solch hohen Leistungsbedarf zur Anregung der Resonanzfrequenz, dass bei einer vorgegebenen zur Verfügung stehenden elektrischen Leistung ein größerer Stromanteil für die Anregung der Schwingung außer Resonanz eine Beeinträchtigung der Messperformance für die Messgrößen Massedurchflussrate und/oder Dichte zur Folge hätte. Dies wäre insbesondere bei Messaufnehmern mit steifen Messrohren der Fall, also tendenziell bei Messaufnehmern mit größeren Nennweiten, beispielsweise ab DN 50.

In einer Weiterbildung der Erfindung beträgt eine Abtastfrequenz, mit welcher die Sensorsignale abgetastet werden nicht weniger als das Vierfache beispielsweise nicht weniger als das Achtfache und insbesondere nicht weniger als das Sechzehnfache der Resonanzfrequenz des Oszillators.

In einer Weiterbildung der Erfindung wird ein Wert einer Übertragungsfunktion gebildet, welche die Amplitude des Sensorsignals der Schwingung außer Resonanz mit der Amplitude des Erregersignals der Schwingung außer Resonanz in Beziehung setzt. Die Anregungsfrequenz der Schwingung außer Resonanz unterscheidet sich dabei in einer derzeit bevorzugten Weiterbildung der Erfindung um einen konstanten Faktor s von der Resonanzfrequenz.

In einer alternativen Ausgestaltung kann sich die Anregungsfrequenz der Schwingung außer Resonanz um einen insbesondere konstanten Offset von der Resonanzfrequenz unterscheiden. In diesem Fall ist dann noch zu ermitteln, welchem Faktor s das Verhältnis von Anregungsfrequenz und Resonanzfrequenz entspricht, um dann eine sachgerechte Interpretation der Beziehung zwischen der Amplitude des Sensorsignals der Schwingung außer Resonanz und der Amplitude des Erregersignals der Schwingung außer Resonanz zu erreichen.

Die Anregungsfrequenz der Schwingung außer Resonanz unterscheidet sich in einer Weiterbildung der Erfindung von der aktuellen Resonanzfrequenz um mindestens 5% der aktuellen Resonanzfrequenz.

In einer Weiterbildung der Erfindung repräsentiert der Wert Übertragungsfunktion eine modale Steifigkeit bzw. Nachgiebigkeit des Oszillators.

In einer Weiterbildung der Erfindung werden bei der Ermittlung der Übertragungsfunktion Querempfindlichkeiten hinsichtlich des Oszillators hinsichtlich der Temperatur, und des Drucks des in dem Messrohr des Oszillators geführten Mediums, sowie Querempfindlichkeiten des Schwingungssensors und des Erregers hinsichtlich der Temperatur kompensiert.

Das erfindungsgemäße Messgerät mit einem Messaufnehmer; und einer Mess- und Betriebsschaltung dient zum Bestimmen einer Massedurchflussrate, einer Dichte und/oder einer Viskosität eines Mediums, wobei der Messaufnehmer umfasst: einen Oszillator mit mindestens einem schwingfähigen Messrohr zum Führen des Mediums; mindestens einen Erreger zum Anregen von Messrohrschwingungen; mindestens einen Sensor zum Erfassen von Messrohrschwingungen; wobei die Mess- und Betriebsschaltung dazu eingerichtet ist, den Erreger zu treiben, Signale des mindestens einen Sensors zu erfassen, und das erfindungsgemäße Verfahren durchzuführen.

Die Erfindung wird nun anhand der in den Zeichnungen dargestellten Ausführungsbeispiele erläutert. Es zeigt:

Fig. 1a: Resonanzkurven für Oszillatoren verschiedener Güten Q.

Fig. 1b: Differenzen zwischen den Resonanzkurven aus Fig. 1a

Fig. 1c: Differenzen zwischen Resonanzkurven von Oszillatoren gleicher Güte, aber veränderter Steifigkeit.

Fig. 2a: Ein Flussdiagramm eines Ausführungsbeispiels der vorliegenden Erfindung;

Fig. 2b: Ein detailliertes Flussdiagramm zur Ermittlung der Amplitude der Schwingung außer Resonanz im Ausführungsbeispiel aus Fig. 2a;

Fig. 3: Eine schematische Darstellung einer Filterstufe die im obigen Ausführungsbeispiel eingesetzt wird; und

Fig. 4: Eine schematische Darstellung eines Ausführungsbeispiels eines Erfindungsgemäßen Messgeräts.

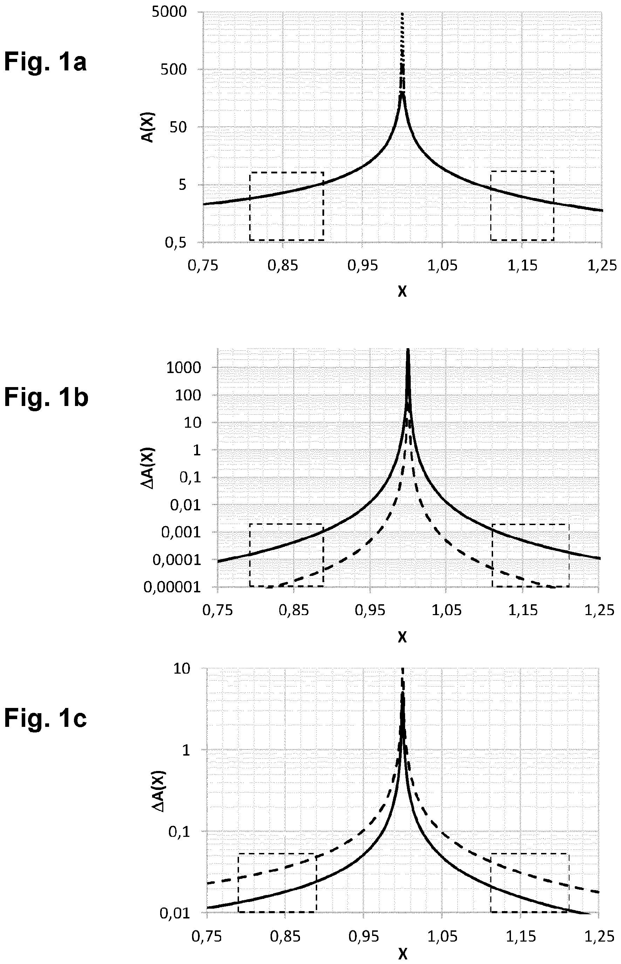

Anhand von Fign. 1a bis 1c wird das grundsätzliche Vorgehen bei der Überwachung des Oszillatorzustands erläutert.

Die in Fig. 1a dargestellten Resonanzkurven stammen von Oszillatoren, die sich nur in ihrer Güte unterscheiden, welche Werte von Q = 200, Q = 1000 bzw. Q = 5000 annimmt. Dies sind typische Werte die beim Betrieb eines Coriolis Massedurchflussmesser auftreten können. Die Amplitude A(X) ist hier im Verhältnis zur Amplitude A(0) bei statischer Auslenkung mit der gleichen Kraft dargestellt. Auf der Abszisse ist die normierte Erregerfrequenz X = f/f0 aufgetragen, wobei f0 die Eigenfrequenz der betrachteten Schwingungsmode des Oszillators ist.

Fig. 1b zeigt Differenzen von Resonanzkurven aus Fig. 1a wobei jeweils die Kurven für Q = 200 und Q = 1000 von der Kurve für Q = 5000 abgezogen wurden. In den durch schraffierte Kästen gekennzeichneten Bereichen oberhalb und unterhalb des Resonanzpeaks bei X = 1, wirken sich Änderungen der Güte praktisch nicht mehr aus selbst eine Änderung der Güte von Q = 5000 auf Q = 200 bewirkt eine Amplitudenänderung um weniger als 0,1 %.

Fig. 1c stellt Differenzen von Resonanzkurven bei einer Güte von Q = 1000 für unterschiedliche Messrohrsteifigkeiten dar die 99,5 % bzw. 99,0 % der Referenzsteifigkeit betragen. Die Differenzkurven sind normiert auf die statische Auslenkung (X = 0) eines Oszillators mit einer Ausgangssteifigkeit von 100%. Aus einem Vergleich der Differenzkurven von 1b und 1c wird ersichtlich, dass der Effekt der beschrieben Steifigkeitsänderungen bei hinreichendem Abstand von Resonanzpeak um einige Größenordnungen stärker ist als der Effekt der Güteänderungen. Daher kann durch Beobachtung der Schwingungsamplituden, beispielsweis in den gekennzeichneten Frequenzbereichen, die mechanische Integrität des Oszillators überwachen. Da jedoch der Absolutwert der Amplitude in den genannten Frequenzbereichen, wie in Fig. 1a dargestellt sehr niedrig ist, erfolgt nach dem Stand der Technik eine Amplitudenmessung nur zu besonderen Diagnoseprozeduren, bei denen der Messbetrieb allenfalls eingeschränkt möglich ist. Bei einer Diagnoseprozedur wird die Schwingung in einem Frequenzbereich von X > 1,1 bzw. X < 0,9 mit einer großen Erregerleistung gespeist um eine zur Vermessung während der Diagnoseprozedur ausreichende Amplitude zu erreichen. Das ist insoweit nachteilig, als Fehler ggf. nur verspätet erkannt werden können, nämlich erst dann, wenn eine Diagnose nach dem Auftreten eines Fehlers detektiert werden können. Zudem ist die Datenbasis für statistische Analysen sehr gering.

Das erfindungsgemäße Verfahren setzt dagegen darauf, die Schwingung außer Resonanz mit sehr geringer Leistung anzuregen, wodurch erstens der laufende Messbetrieb bei der Resonanzfrequenz dadurch praktisch nicht gestört wird, und zweitens eine kontinuierliche Überwachung des Oszillators möglich ist. Insofern als der Signalanteil der Schwingung außer Resonanz in den Sensorsignalen um beispielsweise etwa achtzig Dezibel niedriger ist als der Signalanteil der Resonanzschwingung, werden besondere Maßnahmen ergriffen, um die gewünschte Information, nämlich die Amplitude der Schwingung außer Resonanz zu ermitteln.

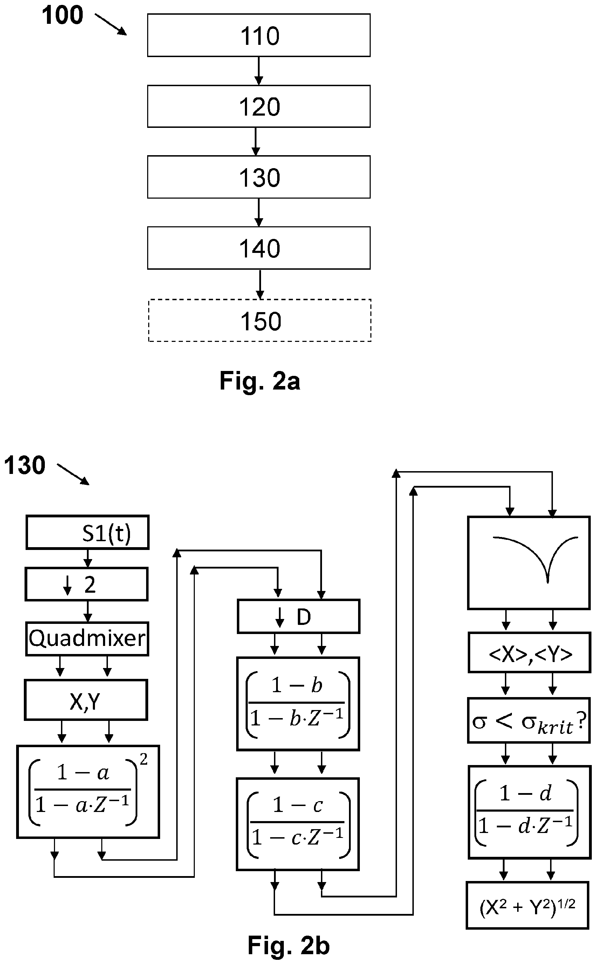

Ein Ausführungsbeispiel zum erfindungsgemäßen Verfahren 100 ist in Fig. 2a dargestellt. Die aktuelle Resonanzfrequenz des Oszillators wird fortlaufend ermittelt 110, indem die Erregung einer Biegeschwingungsnutzmode auf nach einem Resonanzkriterium geregelt wird. Dies kann beispielsweise die Amplitudenmaximierung oder ein Phasenwinkel von 90° zwischen Erregersignal und Auslenkung des Oszillators bzw. 0° zwischen Erregersignal und Geschwindigkeitssignal des Oszillators sein. Der Anregung bei Resonanz wird fortlaufend eine Anregung außer Resonanz überlagert 120, insbesondere mit konstanter Amplitude, wobei die Erregung außer Resonanz bei einer Anregungsfrequenz erfolgt, die sich um einen konstanten Faktor s von der Resonanzfrequenz unterscheidet, wobei beispielsweise gilt s ≤ 0,9 oder s ≥ 1,1. Die Erregerkraft für die Anregung außer Resonanz beträgt nicht mehr als beispielsweise ein Zehntel der Erregerkraft der Anregung bei Resonanz.

Anschließend wird ein Amplitudensignal der Oszillatorschwingung außer Resonanz ermittelt 130.

Ein Verhältnis des ermittelten Amplitudensignals zum Erregersignal wird gebildet. und zur 140. Ggf. erfolgt noch eine Korrektur bezüglich Querempfindlichkeiten, wie Temperatur, Druck und/oder Alterung der Sensoren bzw. Erregers. Geeignete Korrekturfunktionen sind beispielsweise in der noch unveröffentlichten deutschen Patentanmeldung mit dem Aktenzeichen DE 10 2019 122 094.7 offenbart. Die solchermaßen aufbereiteten Daten werden aufgezeichnet und stehen für weitere Auswertungen, wie Trendanalysen und Schwellwertvergleiche 150 zur Verfügung.

Die Ermittlung des Amplitudensignals 130 wird nun anhand von Fig. 2b näher erläutert.

Ein analoges Sensorsignal S1(t), dessen Amplitude proportional zur Schwingungsamplitude des Messrohrs ist wird mit einer Abtastfrequenz von beispielsweise 32 kHz abgetastet. Nach einer Dezimation um einen Faktor 2 werden mittels eines Quadraturmischers zwei Folgen (X, Y) digitaler Werte mit einer Folgefrequenz von 16 kHz bereitgestellt, die zueinander um 90°, bezogen auf die Frequenz der Anregung außer Resonanz, phasenverschoben sind. Die beiden Folgen werden mittels einer Filterfolge, des Typs $T(Z, w) = ((1 - w) / (1 - w Z^{-1}))$ verwendet wobei, w = a, b, c, d unterschiedliche Gewichtungskoeffizienten sind.

Zwischen einer ersten Filterstufe $(T(Z, a))^2$ und einer zweiten Filterstufe $T(Z, b)$ erfolgt eine weitere Dezimation zu einer Frequenz von 2 KHz bzw. 1 KHz.

Nach einer dritten Filterstufe T (Z, c) erfolgt der Einsatz eines Kerbfilters um das Signal bei Schwingung bei der Resonanzfrequenz zu unterdrücken, welches um einige Größenordnungen, beispielsweise etwa 80 dB) stärker ist, als das Signal der interessierenden Schwingung außer Resonanz.

Anschließend erfolgt eine weitere zeitliche Mittelwertbildung mit einer Frequenz von 54 Hz.

Die Mittelwerte X, Y werden über eine Sekunde erfasst, und deren Standardabweichung wird ermittelt. Wenn die Standardabweichung unterhalb eines Schwellwerts liegt, werden die über eine Sekunde gemittelten Mittelwerte, ggf. nach weiteren Kompensationen von Querempfindlichkeiten, einer weiteren Langzeitanalyse zugeführt, anderenfalls werden sie verworfen. Die Langzeitanalyse umfasst eine Filterstufe T (Z, d) und berücksichtigt Werte über eine Zeitspanne in der Größenordnung von 1000 Sekunden. Auf Basis der solchermaßen aufbereiteten Werte für X und Y wird schließlich die Amplitude A des Schwingungssignals außer Resonanz ermittelt gemäß $A = (X^2 + Y^2)^{1/2}$. Diese Amplitude sollte im Verhältnis zum Erregersignal der Schwingung außer Resonanz konstant sein.

Die zu beachtenden Querempfindlichkeiten betreffen beispielsweise die Temperatur der Erreger bzw. Sensoren und/oder des Messrohrs, sowie den im Messrohr herrschenden Mediendruck. Schließlich haben auch die Dichte bzw. die Resonanzfrequenz einen Einfluss auf das Sensorsignal, wenn der Schwingungssensor ein elektromagnetischer Sensor ist. In diesem Fall repräsentiert das Schwingungssignal eine Geschwindigkeit welche proportional ist zu erstens der gesuchten Amplitude der Auslenkung und zweitens zur dichteabhängigen Schwingungsfrequenz.

Die Filterstufen vor dem Notch-Filter können als Fixed-Point-Filter, insbesondere mit 32 Bit oder 64 Bit realisiert werden, während für die letzte Filterstufe derzeit eine floating point Filterstufe bevorzugt wird.

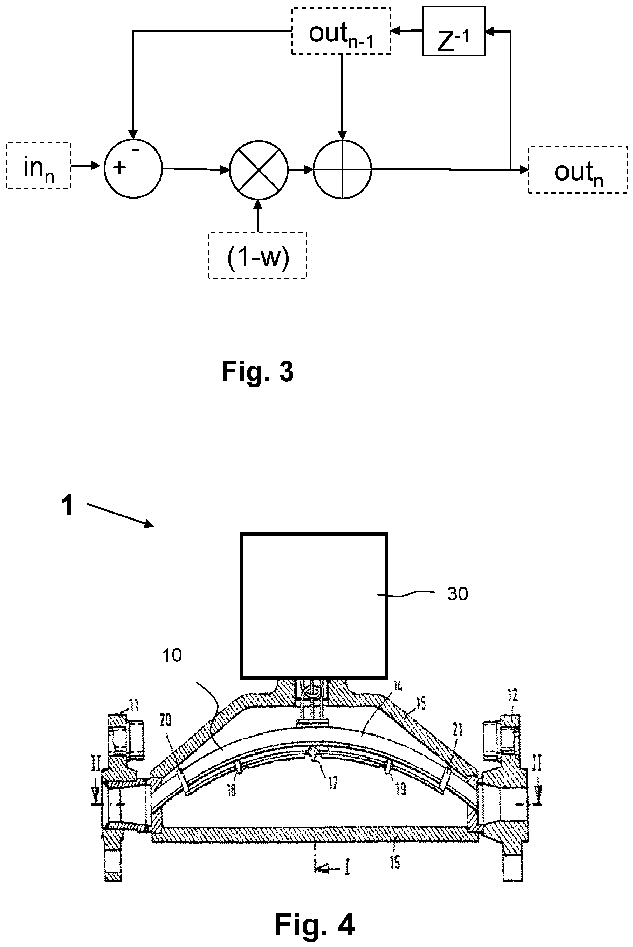

Eine Realisierung der Filterstufe T (Z, w) ist in Fig. 3 dargestellt. Mit dieser Anordnung ergibt sich der n-te Ausgangswert $out_n$ der Filterstufe aus dem vorhergehenden Ausgangswert $out_{n-1}$ und dem n-ten Eingangswert $in_n$ der Filterstufe zu:

$$out_n = (1 - w) \times (in_n - out_{n-1}) + out_{n-1}.$$

Der Faktor 1-w ist in der Fixed-Point-Rechnung darstellbar als

$$1 - w = (2^L - 2^N) / 2^L,$$

wobei beispielsweise L = 32 und N = 18 ... 24).

Mit dem Beschriebenen Verfahren kann das Verhältnis zwischen der Amplitude der Schwingung außer Resonanz und dem zugehörigen bei einem minimalen Erregerstrom von beispielsweise nur 1 mA hinreichend genau bestimmt werden um daraus Veränderungen des Messrohrs frühzeitig zu können. Aufgrund der Geringen Leistungsaufnahme für diese Überwachungsfunktion, bleibt hinreichend Leistung zur Verfügung, um die Messrohrschwingungen bei Resonanz anzuregen, und damit die eigentlichen Messaufgaben des Messaufnehmers zu erfüllen.

Das in Fig. 4 dargestellte Ausführungsbeispiel eines erfindungsgemäßen Messgeräts 1 umfasst einen Oszillator 10 der ein Paar von parallel geführten schwingfähigen Messrohren 14 umfasst, die sich zwischen einem einlassseitigen Flansch 11 und einem auslassseitigen Flansch 12 erstrecken, wobei die Flansche jeweils einen Strömungsteiler bzw. Sammler umfassen, in den die Messrohre 14 münden. Die Strömungsteiler sind durch ein starres Gehäuse 15 miteinander verbunden, so dass Schwingungen der die Messrohre aufnehmenden Strömungsteiler im Bereich von Schwingungsfrequenzen von Biegeschwingungsnutzmoden des Oszillators wirksam unterdrückt sind. Die Messrohre 10 sind mit einer einlassseitigen Knotenplatte 20 und einer auslassseitigen Knotenplatte 21 starr verbunden, wobei die Knotenplatten Schwingungsknoten des durch die beiden der Messrohre 14 gebildeten Oszillators 10 definieren, und damit die Frequenzen der Biegeschwingungsnutzmoden weitgehend festlegen. Der Oszillator 10 wird mit einem zwischen den beiden Messrohren 14 wirkenden elektrodynamischen Erregers 17 zum Schwingen angeregt, wobei die Schwingungen mittels zweier Relativbewegungen der Messrohre 14 zueinander erfassender Schwingungssensoren 18, 19 detektiert werden. Der Erreger 17 wird von einer Betriebs- und Auswerteschaltung 30 betrieben, wobei letztere auch die Signale der Schwingungssensoren erfasst und auswertet, um einen Dichtemesswert und ggf. einen Massedurchflussratenmesswert zu ermitteln. Die Betriebs- und Auswerteschaltung 30 ist erfindungsgemäß ebenfalls dazu eingerichtet, das erfindungsgemäße Verfahren auszuführen, also insbesondere eine Amplitude einer Schwingung außer Resonanz zu ermitteln und zu einem Erregersignal, welches eine Erregerkraft repräsentiert in Beziehung zu setzen. Die Betriebs- und Auswerteschaltung kann, anders als in Fig 4 dargestellt, auch mehrere, räumlich getrennte Module umfassen. So kann die Berechnung der Amplitude der Schwingung außer Resonanz auch in einem abgesetzten Rechenmodul erfolgen, dem die erforderlichen Rohdaten übermittelt werden, beispielsweise drahtlos.

**Patentansprüche**

1. Verfahren zum Betreiben eines Messgeräts mit einem Messaufnehmer, der mindestens einen Oszillator aufweist, wobei der Oszillator mindestens ein schwingfähiges Messrohr zum Führen eines Mediums aufweist;

wobei das Verfahren die folgenden Schritte aufweist:

Ermitteln eines aktuellen Werts einer Resonanzfrequenz für eine Schwingungsmode des Oszillators (110);

Anregen einer Schwingung außer Resonanz (120) mit einer Anregungsfrequenz, die sich von dem aktuellen Wert der Resonanzfrequenz unterscheidet; und

Ermitteln der Amplitude (130) eines Sensorsignals welches die Schwingung außer Resonanz repräsentiert;

**dadurch gekennzeichnet, dass**

die Amplitude des Erregerstromsignals, mit welcher die Schwingung außer Resonanz angeregt wird, nicht mehr als die Hälfte der Amplitude des Erregerstromsignals beträgt, mit welcher gleichzeitig die Resonanzschwingung angeregt wird; und

zur Ermittlung der Amplitude des Sensorsignals der Schwingung außer Resonanz ein Sensorsignal eines Schwingungssensors des Oszillators über ein Tiefpassfilter erfasst wird, dessen Zeitkonstante nicht weniger als 1000 Periodendauern, beispielsweise nicht weniger als 10000 Periodendauern und insbesondere nicht weniger als 100000 Periodendauern der Schwingung außer Resonanz beträgt.

2. Verfahren nach Anspruch 1, wobei die Amplitude des Erregerstromsignals, mit welcher die Schwingung außer Resonanz angeregt wird, nicht mehr als 4 mA, beispielsweise nicht mehr als 1,5 mA beträgt.

3. Verfahren nach Anspruch 1 oder 2, wobei die Schwingung außer Resonanz einer Schwingung bei der Resonanzfrequenz überlagert ist.

4. Verfahren nach Anspruch 1, 2 oder 3, wobei das Sensorsignal des Schwingungssensors bei der Resonanzfrequenz des Oszillators zur Bestimmung der Amplitude des Sensorsignals der Schwingung außer Resonanz mittels eines Filters unterdrückt wird, insbesondere mittels eines Kerbfilters bzw. Notch-Filters.

5. Verfahren nach einem der Ansprüche 1 bis 4, wobei die Amplitude des Erregerstromsignals, mit welcher die Schwingung außer Resonanz angeregt wird, nicht weniger als 0,25 mA, insbesondere nicht weniger als 0,5 mA und bevorzugt nicht weniger als 0,75 mA beträgt.

6. Verfahren nach einem der Ansprüche 1 bis 5, wobei die Amplitude des Erregerstromsignals, mit welcher die Schwingung außer Resonanz angeregt wird, nicht mehr als ein Viertel insbesondere nicht mehr als ein Achtel der Amplitude des Erregerstromsignals beträgt, mit welcher gleichzeitig die Resonanzschwingung angeregt wird.

7. Verfahren nach einem der Ansprüche 1 bis 6, wobei eine Abtastfrequenz, mit welcher die Sensorsignale abgetastet werden, nicht weniger als das Vierfache beispielsweise nicht weniger als das Achtfache und insbesondere nicht weniger als das Sechzehnfache der Resonanzfrequenz des Oszillators beträgt.

8. Verfahren nach einem der vorhergehenden Ansprüche, wobei ein Wert einer Übertragungsfunktion gebildet wird, welcher die Amplitude des Sensorsignals der Schwingung außer Resonanz mit der Amplitude des Erregersignals der Schwingung außer Resonanz in Beziehung setzt.

9. Verfahren nach Anspruch 8, wobei der Wert der Übertragungsfunktion eine modale Steifigkeit bzw. Nachgiebigkeit des Oszillators repräsentiert.

10. Verfahren nach Anspruch 8 oder 9, wobei bei der Ermittlung der Übertragungsfunktion Querempfindlichkeiten hinsichtlich des Oszillators hinsichtlich der Temperatur, und des Drucks des in dem Messrohr des Oszillators geführten Mediums, sowie Querempfindlichkeiten des Schwingungssensors und des Erregers hinsichtlich der Temperatur kompensiert werden.

11. Verfahren nach einem der vorhergehenden Ansprüche, wobei sich die Anregungsfrequenz der Schwingung außer Resonanz um mindestens 5% der Resonanzfrequenz von der Resonanzfrequenz unterscheidet.

12. Verfahren nach einem der vorhergehenden Ansprüche, wobei sich die Anregungsfrequenz der Schwingung außer Resonanz um einen konstanten Faktor s von dem aktuellen Wert der Resonanzfrequenz unterscheidet.

13. Messgerät (1) zum Bestimmen einer Massedurchflussrate, einer Dichte und/oder einer Viskosität eines Mediums, umfassend:

einen Messaufnehmer; und
eine Mess- und Betriebsschaltung (30)
wobei der Messaufnehmer aufweist:

einen Oszillator mit mindestens einem schwingfähigen Messrohr (10) zum Führen des Mediums;
mindestens einen Erreger (17) zum Anregen von Messrohrschwingungen;
mindestens einen Sensor (18, 19) zum Erfassen von Messrohrschwingungen;
wobei die Mess- und Betriebsschaltung (30) dazu eingerichtet ist, den Erreger (17) zu treiben, Signale des mindestens einen Sensors (18, 19) zu erfassen, und das Verfahren nach einem der vorhergehenden Ansprüche durchzuführen.

**Claims**

1. Method for operating a measuring device with a measuring sensor which has at least one oscillator, wherein the oscillator has at least one oscillating measuring tube for guiding a medium; wherein the method comprises the following steps:

   Determining a current value of a resonant frequency for an oscillation mode of the oscillator (110);
   exciting an oscillation out of resonance (120) at an excitation frequency different from the current value of the resonance frequency; and
   Determining the amplitude (130) of a sensor signal which represents the oscillation out of resonance;
   **characterized in that**
   the amplitude of the excitation current signal with which the oscillation is excited out of resonance is not more than half the amplitude of the excitation current signal with which the resonant oscillation is simultaneously excited ; and
   to determine the amplitude of the sensor signal of the oscillation out of resonance, a sensor signal of an oscillation sensor of the oscillator is detected via a low-pass filter, the time constant of which is not less than 1000 period durations, for example not less than 10000 period durations and in particular not less than 100000 period durations of the oscillation out of resonance.

2. The method according to claim 1, wherein the amplitude of the excitation current signal with which the oscillation is excited out of resonance is not more than 4 mA, for example not more than 1.5 mA.

3. The method according to claim 1 or 2, wherein the vibration out of resonance is superimposed on a vibration at the resonant frequency.

4. Method according to claim 1, 2 or 3, wherein the sensor signal of the oscillation sensor at the resonance frequency of the oscillator is suppressed by means of a filter, in particular by means of a notch filter or notch filter, in order to determine the amplitude of the sensor signal of the oscillation outside resonance.

5. Method according to one of claims 1 to 4, wherein the amplitude of the excitation current signal with which the oscillation is excited out of resonance is not less than 0.25 mA, in particular not less than 0.5 mA and preferably not less than 0.75 mA.

6. Method according to one of claims 1 to 5, wherein the amplitude of the excitation current signal with which the oscillation is excited out of resonance is not more than a quarter, in particular not more than an eighth, of the amplitude of the excitation current signal with which the resonance oscillation is simultaneously excited .

7. The method according to any one of claims 1 to 6, wherein a sampling frequency at which the sensor signals are sampled is not less than four times, for example not less than eight times and in particular not less than sixteen times, the resonant frequency of the oscillator.

8. The method according to any one of the preceding claims, wherein a value of a transfer function is formed which relates the amplitude of the sensor signal of the vibration out of resonance to the amplitude of the excitation signal of the vibration out of resonance.

9. The method according to claim 8, wherein the value of the transfer function represents a modal stiffness or compliance of the oscillator.

10. Method according to claim 8 or 9, wherein, when determining the transmission gation function, cross-sensitivities with respect to the oscillator with regard to the temperature and the pressure of the medium guided in the measuring tube of the oscillator, as well as cross-sensitivities of the vibration sensor and the exciter with regard to the temperature are compensated sated.

11. The method according to any one of the preceding claims, wherein the excitation frequency of the off-resonance oscillation differs from the resonant frequency by at least 5% of the resonant frequency.

12. The method according to any one of the preceding claims, wherein the excitation frequency of the off-resonance oscillation differs by a constant factor s from the current value of the resonance frequency.

13. A measuring device (1) for determining a mass flow rate, a density and/or a viscosity of a medium, comprising:

   a transducer; and
   a measuring and operating circuit (30)
   whereby the sensor has
   an oscillator with at least one oscillating measuring tube (10) for guiding the medium;

at least one exciter (17) for exciting measuring tube oscillations;

at least one sensor (18, 19) for detecting measuring tube vibrations;

wherein the measuring and operating circuit (30) is arranged to drive the exciter (17), to detect signals from the at least one sensor (18, 19), and to perform the method according to any one of the preceding claims.

## Revendications

1. Procédé de fonctionnement d'un appareil de mesure avec un capteur de mesure qui présente au moins un oscillateur, l'oscillateur présentant au moins un tube de mesure vibrant pour le guidage d'un fluide ; ledit procédé comprenant les étapes suivantes :

   déterminer une valeur actuelle d'une fréquence de résonance pour un mode d'oscillation de l'oscillateur (110) ;
   exciter une vibration hors résonance (120) à une fréquence d'excitation qui est différente de la valeur actuelle de la fréquence de résonance ; et
   déterminer l'amplitude (130) d'un signal de capteur qui représente l'oscillation hors résonance ;
   **caractérisé en ce que**
   l'amplitude du signal de courant d'excitation avec laquelle l'oscillation hors résonance est excitée n'est pas supérieure à la moitié de l'amplitude tude du signal de courant d'excitation avec laquelle l'oscillation de résonance est simultanément excitée ; et
   pour déterminer l'amplitude du signal de capteur de l'oscillation hors résonance, un signal de capteur d'un capteur d'oscillation de l'oscillateur est détecté par l'intermédiaire d'un filtre passe-bas dont la constante de temps n'est pas inférieure à 1000 durées de période, par exemple pas inférieure à 10 000 durées de période et en particulier pas inférieure à 100 000 durées de période de l'oscillation hors résonance.

2. Procédé selon la revendication 1, dans lequel l'amplitude du signal de courant d'excitation avec lequel l'oscillation est excitée hors résonance n'est pas supérieure à 4 mA, par exemple pas supérieure à 1,5 mA.

3. Procédé selon la revendication 1 ou 2, dans lequel l'oscillation hors résonance est superposée à une oscillation à la fréquence de résonance.

4. Procédé selon la revendication 1, 2 ou 3, dans lequel le signal de capteur du capteur d'oscillation est supprimé à la fréquence de résonance de l'oscillateur pour déterminer l'amplitude du signal de capteur de l'oscillation hors résonance au moyen d'un filtre, en particulier au moyen d'un filtre à encoche ou d'un filtre Notch.

5. Procédé selon l'une quelconque des revendications 1 à 4, dans lequel l'amplitude du signal de courant d'excitation avec lequel l'oscillation est excitée hors résonance n'est pas inférieure à 0,25 mA, en particulier pas inférieure à 0,5 mA et de préférence pas inférieure à 0,75 mA.

6. Procédé selon l'une quelconque des revendications 1 à 5, dans lequel l'amplitude du signal de courant d'excitation avec lequel l'oscillation hors résonance est excitée n'est pas supérieure à un quart, en particulier pas supérieure à un huitième, de l'amplitude tude du signal de courant d'excitation avec lequel l'oscillation de résonance est simultanément excitée .

7. Procédé selon l'une quelconque des revendications 1 à 6, dans lequel une fréquence d'échantillonnage à laquelle les signaux de capteur sont échantillonnés n'est pas inférieure à quatre fois, par exemple pas inférieure à huit fois, et en particulier pas inférieure à seize fois, la fréquence de résonance de l'oscillateur.

8. Procédé selon l'une quelconque des revendications précédentes, dans lequel on forme une valeur d'une fonction de transfert qui relie l'amplitude du signal de capteur de l'oscillation hors résonance à l'amplitude du signal d'excitation de l'oscillation hors résonance.

9. Procédé selon la revendication 8, dans lequel la valeur de la fonction de transfert représente une raideur ou une compliance modale de l'oscillateur.

10. Procédé selon la revendication 8 ou 9, dans lequel, lors de la détermination de la fonction de transmission , des sensibilités transversales par rapport à l'oscillateur en ce qui concerne la température et la pression du fluide guidé dans le tube de mesure de l'oscillateur, ainsi que des sensibilités transversales du capteur de vibrations et de l'excitateur en ce qui concerne la température, sont compensées .

11. Procédé selon l'une quelconque des revendications précédentes, dans lequel la fréquence d'excitation de l'oscillation hors résonance diffère de la fréquence de résonance d'au moins 5% de la fréquence de résonance.

12. Procédé selon l'une quelconque des revendications précédentes, dans lequel la fréquence d'excitation de l'oscillation hors résonance diffère de la valeur courante de la fréquence de résonance d'un facteur constant s.

**13.** Appareil de mesure (1) pour déterminer un débit massique, une densité et/ou une viscosité d'un milieu, comprenant :

un capteur de mesure ; et
un circuit de mesure et de fonctionnement (30)
dans lequel le capteur de mesure comprend
un oscillateur avec au moins un tube de mesure
(10) capable d'osciller pour guider le fluide ;
au moins un excitateur (17) pour exciter les oscillations du tube de mesure ;
au moins un capteur (18, 19) pour détecter les vibrations du tube de mesure ;
le circuit de mesure et de fonctionnement (30) étant adapté pour entraîner l'excitateur (17), pour acquérir des signaux du au moins un capteur (18, 19), et pour mettre en oeuvre le procédé selon l'une quelconque des revendications précédentes.

**Fig. 1a**

**Fig. 1b**

**Fig. 1c**

**100**

$$110$$

$$120$$

$$130$$

$$140$$

$$150$$

**Fig. 2a**

**130**

S1(t)

↓ 2

Quadmixer

X,Y

$$\left( \frac{1-a}{1-a \cdot Z^{-1}} \right)^2$$

↓ D

$$\left( \frac{1-b}{1-b \cdot Z^{-1}} \right)$$

$$\left( \frac{1-c}{1-c \cdot Z^{-1}} \right)$$

<X>,<Y>

$$\sigma < \sigma_{krit}?$$

$$\left( \frac{1-d}{1-d \cdot Z^{-1}} \right)$$

(X² + Y²)^{1/2}

**Fig. 2b**

**Fig. 3**

**Fig. 4**

**IN DER BESCHREIBUNG AUFGEFÜHRTE DOKUMENTE**

**In der Beschreibung aufgeführte Patentdokumente**

- WO 2012062551 A1

- DE 102019122094